# EUROPÄISCHE PATENTANMELDUNG

(11) **EP 1 069 430 A1**
(43) Veröffentlichungstag der Anmeldung: **17.01.2001**
(21) Anmeldenummer: 00114603.4
(22) Anmeldetag: 07.07.2000
(51) Int. Cl.: G01N 25/72

(54) **Verfahren und Vorrichtung zum Nachweis von Fehlern in metallischen Bauteilen**

(30) Priorität: 16.07.1999 DE 19933446
(71) Anmelder: MTU MOTOREN- UND TURBINEN-UNION MÜNCHEN GMBH, 80976 München (DE)
(72) Erfinder: Bamberg, Joachim, Dr., 85221 Dachau (DE); Zenzinger, Günter, 80997 München (DE)

(57) **Zusammenfassung**

Die Erfindung betrifft ein Verfahren sowie eine Vorrichtung zum Nachweis von Fehlern, insbesondere von Rissen, in metallischen Bauteilen. Das erfindungsgemäße Verfahren ist dadurch gekennzeichnet, daß in den zu überprüfenden Bereich 6 des Bauteils 1 ein gepulstes Hochfrequenzmagnetfeld eingekoppelt wird, und die Temperaturverteilung der durch Wirbelströme hervorgerufenen Erwärmung unmittelbar im Anschluß an einen Magnetfeldimpuls erfaßt wird. Die erfindungsgemäße Vorrichtung zum Nachweis von Fehlern in metallischen Bauteilen 1 besteht aus einer ein starkes, gepulstes magnetisches Wechselfeld erzeugenden Baugruppe, die vorzugsweise aus einer kernlosen Spule 3 und einem Hochfrequenz-Generator 4 gebildet ist, und einer Einrichtung zur Erfassung der Temperaturverteilung des zu überprüfenden Bereichs 6 des Bauteils 1, die vorzugsweise aus einer Thermografiekamera 5 besteht.

## Beschreibung

Die Erfindung betrifft ein Verfahren sowie eine Vorrichtung zum Nachweis von Fehlern in metallischen Bauteilen.

Der zerstörungsfreie Nachweis von Fehlern, insbesondere von offenen und verdeckten Rissen in Bauteilen gewinnt zunehmend an Bedeutung. Dies liegt daran, dass Werkstoffe und Bauteile immer häufiger bis an ihre Belastbarkeitsgrenze ausgelegt werden. Damit steigen die Anforderungen an die Qualitätskontrolle und an das Fehlernachweisvermögen zerstörungsfreier Prüfverfahren.

Zum zerstörungsfreien Nachweis von offenen und verdeckten Rissen in metallischen Werkstoffen ist die Wirbelstromprüfung seit nunmehr über 40 Jahren fest etabliert. Im Gegensatz zur Thermografieprüfung, die nur empfindlich auf horizontale Fehler (z.B. Delaminationen) reagiert, lassen sich mit der Wirbelstromprüfung senkrechte Risse empfindlich nachweisen.

Bei der Wirbelstromprüfung wird eine Tastspule über das Bauteil bewegt. Dabei werden Punkt für Punkt Messsignale aufgezeichnet. Für eine flächendeckende Prüfung muss daher das Bauteil in einzelnen Prüfspuren abgescannt werden. Für ebene oder kreisförmige Bauteile sind zu diesem Zweck mechanische Scanner entwickelt worden. Beispielsweise aus der DE 196 42 981 A1 sind ein Verfahren und eine Vorrichtung zum Abtasten einer Bauteiloberfläche mittels einer Wirbelstromsonde bekannt.

Die US 5 430 376 schützt Verfahren und Vorrichtung für eine kombinierte Schichtdickenmessung und Rissprüfung an oberflächenbeschichteten Metallbauteilen, wie z.B. Turbinenschaufeln. Dabei ist es erforderlich, die Bauteiloberfläche mit einer thermoelektrischen Sonde und mit einer Wirbelstromsonde vollständig abzutasten, d.h. zu scannen.

Die durch CAD erstellten Bauteile und Komponenten zeichnen sich aber zunehmend durch komplexere Geometrien aus. Diese oft stark gekrümmten Bauteiloberflächen sind mit solchen Scannern nicht oder nur mit reduzierter Empfindlichkeit prüfbar. Bei Bauteilen komplexer Geometrie ist ein erheblicher Aufwand zur lückenlosen Überprüfung notwendig. Die Prüfzeit ist lang. Außerdem sind Bauteilecken und -kanten diesem Prüfverfahren nicht zugänglich.

Aus der US 5,562,345 ist ein Verfahren zur Analyse von Rissen in Bauteilen bekannt, bei dem das Bauteil durch Wirbelströme aufgeheizt und die Temperaturänderung als Funktion der Zeit gemessen wird. Durch Vergleich mit den Daten eines einwandfreien Bauteils können Rückschlüsse auf Fehler im Bauteil gezogen werden. Dieses Verfahren lässt sich aber nur bei Verbundmaterialien erfolgreich einsetzen, bei denen die Wärmeleitung aufgrund von Delaminationen behindert wird. Für vollständig metallische Bauteile ist das Verfahren ungeeignet.

Aus der WO 99/10731 ist es bekannt, im Erdboden vergrabene Gegenstände, wie Minen oder Abfall, zu orten und zu identifizieren, indem gerichtete Mikrowellenenergie in den Erdboden geleitet, der fragliche Gegenstand damit erwärmt, und ein lokaler Temperaturunterschied an der Erdoberfläche über dem Gegenstand messtechnisch erfasst wird, vorzugsweise mit Infrarotkamera. Dabei wird ausgenutzt, dass das Erwärmungsverhalten des Gegenstandes im Mikrowellenfeld anders ist, als das des umgebenden Bodens.

Die DE 197 47 784 A1 behandelt in relativ allgemeiner und umfassender Weise die Objekterkennung mittels Thermosignaturanalyse. Dabei wird Energie mittels eines elektromagnetischen Wechselfeldes in das Objekt eingebracht, durch Anregung des stotfspezifischen Dipolmomentes in thermische Energie gewandelt und als Thermosignatur der Objektoberfläche z.B. mittels Infrarotsensorik erfasst.

Es ist Aufgabe der vorliegenden Erfindung, ein Verfahren und eine Vorrichtung zum Nachweis von Fehlern in metallischen Bauteilen anzugeben, die eine schnelle, zuverlässige und lückenlose Prüfung auch von Bauteilen komplexer Geometrie ermöglichen.

Diese Aufgabe wird verfahrensmäßig durch ein Verfahren zum Nachweis von Fehlern, insbesondere von Rissen, in metallischen Bauteilen gelöst, bei dem in das Bauteil ein gepulstes Hochfrequenzmagnetfeld eingekoppelt wird, und die Temperaturverteilung der durch Wirbelströme hervorgerufenen Erwärmung unmittelbar im Anschluss an einen Magnetfeldpuls erfasst wird.

In den zu überprüfenden Bereich des metallischen Bauteils wird ein gepulstes Hochfrequenzmagnetfeld eingekoppelt, durch das Wirbelströme induziert werden. Durch den elektrischen Widerstand im Bauteil erzeugen diese Ströme Wärme. Die Temperatur des Bauteils steigt an.

Da die Temperaturerhöhung durch Wärmeleitung in der ersten Zeit nach Einsetzen der Wirbelströme vernachlässigbar ist, ist die Temperaturerhöhung also direkt proportional zur eingebrachten Wirbelstromstärke. Befindet sich ein Fehler, insbesondere ein offener oder verdeckter Riss, im Bauteil, so können sich an dieser Stelle keine Wirbelströme ausbilden. Folglich findet dort keine direkte Temperaturerhöhung statt. Durch Erfassung des Temperaturbildes des Bauteils unmittelbar im Anschluss an einen Magnetfeldimpuls können Fehler nachgewiesen und visualisiert werden.

Da die Temperaturerhöhung durch Wärmeleitung nur innerhalb der ersten Zeit nach Einsetzen der Wirbelströme vernachlässigbar ist, hat sich eine Pulsdauer des Hochfrequenzmagnetfeldes zwischen 0,1 s und 1 s als vorteilhaft herausgestellt.

Vorzugsweise wird das Hochfrequenzmagnetfeld durch eine kernlose Spule erzeugt, die an einen Hochfrequenz-Generator angeschlossen ist. Der zu überprüfende Bereich des Bauteils wird in die Spule eingeführt. Durch den Hochfrequenz-Generator wird ein starkes magnetisches Wechselfeld erzeugt, welches die zu prüfende Bauteiloberfläche durchdringt und im Bauteil Wirbelströme induziert.

Als günstige Prüfparameter haben sich Frequenzen des Hochfrequenz-Generators von 50 bis 200 kHz, insbesondere 100 kHz, erwiesen. Um eine signifikante Erwärmung des zu überprüfenden Bauteils zu erreichen, ist eine Leistung des Hochfrequenz-Generators von 0,5 bis 2 kW, insbesondere 1 kW, zweckmäßig.

Vorzugsweise wird zur Erfassung der Erwärmung des zu überprüfenden Bauteils eine Thermografiekamera verwendet.

Weiter wird die erfindungsgemäße Aufgabe vorrichtungsmäßig durch eine Vorrichtung zum Nachweis von Fehlern, insbesondere von Rissen, in metallischen Bauteilen gelöst, die aus einer ein gepulstes Hochfrequenzmagnetfeld erzeugenden Baugruppe und einer Einrichtung zur Erfassung der Temperaturverteilung des zu prüfenden Bauteils besteht.

Vorzugsweise besteht die Baugruppe zur Erzeugung eines magnetischen Wechselfeldes aus einem Hochfrequenz-Generator und einer kernlosen Spule. Der zu überprüfende Bereich des Bauteils kann dann nach dem erfindungsgemäßen Verfahren in die kernlose Spule eingeführt werden. Durch den Hochfrequenz-Generator wird innerhalb der Spule ein starkes magnetisches Wechselfeld erzeugt, das wiederum Wirbelströme innerhalb des Bauteils induziert.

Als Einrichtung zur Erfassung der Temperaturverteilung des Bauteils wird bei der erfindungsgemäßen Vorrichtung vorzugsweise eine Thermografiekamera verwendet.

Das erfindungsgemäße Verfahren sowie die erfindungsgemäße Vorrichtung weisen den besonderen Vorteil auf, dass der gesamte zu überprüfende Bereich des Bauteils in einem Arbeitsgang geprüft werden kann. Das Bauteil muss nicht Schritt für Schritt abgescannt werden. So ergeben sich kurze Bauteil-Prüfzeiten. Außerdem sind auch die Bauteilecken und -kanten, die mit den im Stand der Technik bekannten Verfahren nicht überprüft werden können, zugänglich.

Ein Ausführungsbeispiel der Erfindung wird näher anhand der beigefügten Abbildung erläutert:

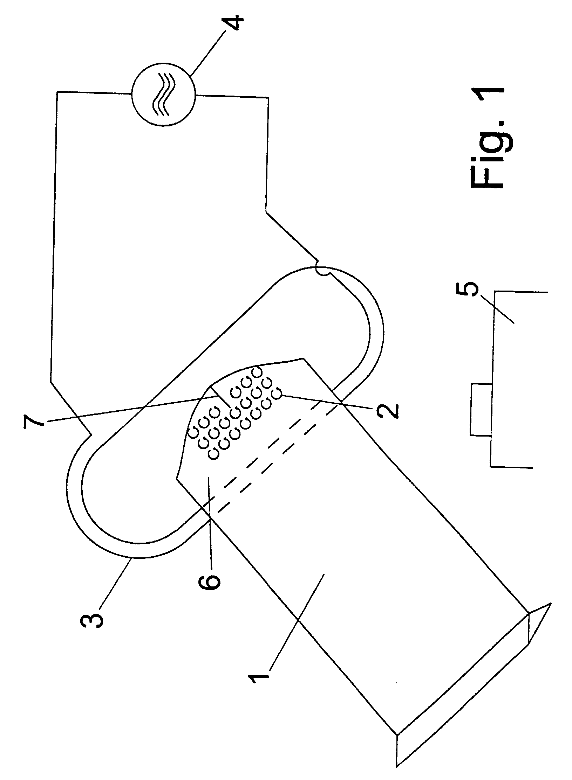

- **Fig. 1**: zeigt schematisch eine erfindungsgemäße Prüfvorrichtung, in der sich ein zu prüfendes Bauteil befindet.

In **Fig. 1** ist schematisch eine Turbinenschaufel **1** dargestellt, deren gekrümmte Schaufelblattspitze **6** auf Risse **7** überprüft werden soll. Dazu wird der zu überprüfende Bereich **6** in den Innenraum einer kernlosen Spule **3** eingeführt, die mit einem Hochfrequenz-Generator **4** verbunden ist. Der Hochfrequenz-Generator **4** wird mit einer Leistung von 1 kW und einer Frequenz von 100 kHz gepulst betrieben. Die optimale Pulsdauer hängt vom zu prüfenden Bauteil ab und liegt typischerweise zwischen 0,1 und 1 s oder leicht darüber.

Der Hochfrequenz-Generator **4** erzeugt innerhalb der kernlosen Spule **3** ein starkes magnetisches Wechselfeld, das die Oberfläche der Schaufelblattspitze **6** der Turbinenschaufel **1** durchdringt und darin die schematisch angedeuteten Wirbelströme **2** induziert.

Durch die Wirbelströme **2** erfolgt eine Erwärmung der Schaufelblattspitze **6**. Innerhalb der Pulsdauer des Hochfrequenz-Generators **4** sind die Wärmeleitungseffekte noch vernachlässigbar. Die Temperaturerhöhung hängt funktional mit der eingebrachten Wirbelstromstärke zusammen. Im Falle eines Risses **7** im Bauteil, entstehen an dieser Stelle keine Wirbelströme **2** und somit auch keine Temperaturerhöhung.

Ein Temperaturbild des zu prüfenden Bauteils wird von der Thermografiekamera **5** aufgezeichnet. Dabei liefert die Thermografiekamera **5** eine einmalige Momentaufnahme der Temperaturverteilung zu einem vorgegebenen Zeitpunkt nach Pulsbeginn des Hochfrequenz-Generators **4**, in der Regel unmittelbar im Anschluss an einen Magnetfeldpuls.

Anhand des Temperaturbildes können auch senkrechte Risse **7** im Bauteil empfindlich nachgewiesen werden. Die Prüfung des gesamten Bauteils **1** oder des zu prüfenden Bereichs **6** des Bauteils kann in einem Arbeitsgang erfolgen. Ein aufwendiges Abscannen des Bauteils ist nicht mehr notwendig. Auch Ecken und Kanten eines geometrisch komplex geformten Bauteils sind der Prüfung zugänglich.

## Patentansprüche

1. Verfahren zum Nachweis von Fehlern, insbesondere von Rissen (7), in metallischen Bauteilen (1), bei dem in das Bauteil (1) ein gepulstes Hochfrequenzmagnetfeld eingekoppelt wird, und die Temperaturverteilung der durch Wirbelströme (2) hervorgerufenen Erwärmung im Anschluss an einen Magnetfeldpuls erfasst wird, bevor die Wärmeleitung im Bauteil (1) fehlerbedingte, erfassbare Temperaturunterschiede ausgleicht.

2. Verfahren nach Anspruch 1, **dadurch gekennzeichnet**, dass die Pulsdauer des Hochfrequenzmagnetfeldes 0,1 bis 1 s beträgt.

3. Verfahren nach Anspruch 1 oder 2, **dadurch gekennzeichnet**, dass zur Erzeugung des Hochfrequenzmagnetfeldes eine kernlose Spule (3) und ein Hochfrequenz-Generator (4) verwendet werden.

4. Verfahren nach Anspruch 3, **dadurch gekennzeichnet**, dass der Hochfrequenz-Generator (4) mit einer Frequenz von 50 bis 200 kHz, insbesondere mit 100 kHz, betrieben wird.

5. Verfahren nach Anspruch 3 oder 4, **dadurch gekennzeichnet**, dass der Hochfrequenz-Generator (4) mit einer Leistung von 0,5 bis 2 kW, insbesondere mit 1 kW, betrieben wird.

6. Verfahren nach einem der Ansprüche 1 bis 5, **dadurch gekennzeichnet**, dass zur Erfassung der Temperaturverteilung eine Thermografiekamera (5) verwendet wird.

7. Vorrichtung zum Nachweis von Fehlern, insbesondere von Rissen (7), in metallischen Bauteilen (1), bestehend aus einer ein gepulstes Hochfrequenzmagnetfeld und mit diesem Wirbelströme (2) im Bauteil (1) erzeugenden Baugruppe (3, 4) und einer Einrichtung (5) zur Erfassung der Temperaturverteilung der durch die Wirbelströme (2) hervorgerufenen Erwärmung des Bauteils (1).

8. Vorrichtung nach Anspruch 7, **dadurch gekennzeichnet**, dass die Baugruppe zur Erzeugung des gepulsten Hochfrequenzmagnetfeldes aus einem Hochfrequenz-Generator (4) und einer kernlosen Spule (3) besteht.

9. Vorrichtung nach Anspruch 7 oder 8, **dadurch gekennzeichnet**, dass die Einrichtung zur Erfassung der Temperaturverteilung eine Thermografiekamera (5) ist.
